# EUROPÄISCHE PATENTSCHRIFT

(11) **EP 2 310 226 B1**
(45) Veröffentlichungstag und Bekanntmachung des Hinweises auf die Patenterteilung: **18.05.2016**
(21) Anmeldenummer: 09776918.6
(22) Anmeldetag: 02.07.2009
(51) Int. Cl.: B60N 2/015, B60N 2/36, E05B 17/00

(54) **VERRIEGELUNGSVORRICHTUNG FÜR EINEN FAHRZEUGSITZ**
LOCKING MECHANISM FOR A VEHICLE SEAT
DISPOSITIF DE VERROUILLAGE POUR SIÈGE DE VÉHICULE

(30) Priorität: 11.07.2008 DE 102008033304
(43) Veröffentlichungstag der Anmeldung: 20.04.2011
(73) Patentinhaber: Johnson Controls Components GmbH & Co. KG, 67657 Kaiserslautern (DE)
(72) Erfinder: MÜLLER, Peter, 67686 Mackenbach (DE); KREUELS, Olaf, 66482 Zweibrücken (DE); HABER, Stefan, 66955 Pirmasens (DE); WINDECKER, Volker, 67729 Sippersfeld (DE); SCHMITT, Denise, 68519 Viernheim (DE)
(74) Vertreter: Loock, Jan Pieter
(86) Internationale Anmeldenummer: PCT/EP2009/004774
(87) Internationale Veröffentlichungsnummer: WO 2010/003587

(56) Entgegenhaltungen:
- EP-A- 0 894 926
- DE-A1- 10 126 687
- DE-A1-102004 021 516
- FR-A- 2 539 793
- GB-A- 2 048 365
- JP-U- 1 145 840
- JP-U- 60 114 035
- US-A- 4 073 519
- US-A- 4 711 493
- US-A1- 2005 077 770

## Beschreibung

Die Erfindung betrifft eine Verriegelungsvorrichtung für einen Fahrzeugsitz, insbesondere für einen Kraftfahrzeugsitz, mit den Merkmalen des Oberbegriffs des Anspruches 1.

Aus der DE 101 26 687 A1 ist eine Verriegelungsvorrichtung dieser Art bekannt, bei welcher ein Schlossgehäuse eine metallische Klinke, auch als Drehfalle bezeichnet, welche zum Verriegeln mit einem metallischen Gegenelement zusammenwirkt, und ein metallisches Sicherungselement, welches die Klinke im verriegelten Zustand sichert, schwenkbar lagert. Mit dem Schlossgehäuse ist ein Entriegelungsgehäuse verbunden, das einen manuell schwenkbaren Entriegelungsgriff lagert, welcher mittels einer Koppel am Sicherungselement angelenkt ist. Weitere Verriegelungsvorrichtungen mit Koppeln zwischen dem Entriegelungsgriff und dem Sicherungselement sind aus der JP 60-114035 U und der US 2005/0077770 A1 bekannt.

Der Erfindung liegt die Aufgabe zu Grunde, eine Verriegelungsvorrichtung der eingangs genannten Art zu verbessern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Eine direkte Anlenkung des Entriegelungsgriffs an einem der vorhandenen Sicherungselemente und damit eine direkte Ansteuerung der Sicherungselemente mittels des Entriegelungsgriffs macht Zwischenelemente, wie Koppelstange oder Hebelkinematiken unnötig, vermeidet zusätzliche Befestigungsclips oder Kunststoffummantelungen, gegebenenfalls auch spiegelsymmetrische Teile.

In einer bevorzugten Ausführungsform, welche auch crashsicher ist, sind zwei Sicherungselemente vorgesehen, und zwar ein Spannelement, welches vorgespannt ist und im verriegelten Zustand auf die Klinke einwirkt, beispielsweise indem es mittels einer Spannfläche auf eine Funktionsfläche der Klinke einwirkt, und dadurch ein schließendes Moment auf die Klinke ausübt, und ein Fangelement, welches im Normalfall in geringem Abstand zur Klinke, insbesondere deren Funktionsfläche, angeordnet ist und im Crashfall, insbesondere mittels einer Fangfläche, die Klinke, insbesondere an deren Funktionsfläche, abstützt, und zwar in der Regel formschlüssig, so dass ein eventuelles Öffnen des Spannelements entgegen dessen Vorspannung folgenlos bleibt.

Eine an der Klinke sitzende Kappe, welche wenigstens teilweise den Rand eines Hakenmauls der Klinke bedeckt, verringert die Geräuschbildung beim Kontakt zwischen Klinke und Gegenelement. Gegenüber einem Umspritzen hat eine Verbindung von Kappe und Klinke mittels Vorsprüngen und Öffnungen den Vorteil, dass keine Spritzwerkzeuge mit Zuführung der Klinken notwendig sind, Maßungenauigkeiten und Abstimmungsprobleme aufgrund der Dickentoleranzen des Metalls, starke Unterschiede im Schwindungsverhalten und ungünstige Spannungsverteilungen im Bauteil vermieden werden.

Es sind verschiedene Bedeckungen der Klinke möglich und verschiedene Varianten der Verbindung zwischen Kappe und Klinke, beispielsweise Clipsverbindungen und Ultraschallnietungen. Die verschiedenen Varianten können in einfachen Spritzwerkzeugen hergestellt werden. Die Variantenbildung kann auf der selben Montageeinrichtung durchgeführt werden.

Die Integration eines dämpfend wirkenden Anschlags hat den Vorteil, dass beim Aufprall des Gegenelementes eine bestimmte (elastische) Verformung des Schlossgehäuses erfolgt, wodurch der Aufprall des Gegenelementes gedämpft wird. Gegenüber Verriegelungsvorrichtungen mit gesondert ausgebildeten und an der Aufnahme angebrachten Puffern hat eine einstückige Ausbildung oder wenigstens stoffliche Verbindung des integrierten ersten Anschlags mit dem Schlossgehäuse den Vorteil einer geringeren Anzahl von Bauteilen. Das Schlossgehäuse ist im Bereich dieses ersten Anschlags nachgiebig ausgebildet, beispielsweise indem Materialaussparungen vorgesehen sind.

Nachdem das Gegenelement das Schlossgehäuse aufgrund des Aufpralls um ein gewisses Maß elastisch verformt hat, trifft es vorzugsweise auf einen (metallischen) zweiten Anschlag, beispielsweise an einem Schlossdeckel, welcher dazu dient, eine zu starke Verformung sowie Beschädigung des Schlossgehäuses durch den Aufprall des Gegenelementes zu vermeiden. Der zweite Anschlag liegt parallel neben dem ersten Anschlag, jedoch um das gewisse Maß in der Einschwenkrichtung nach hinten verlagert.

Das Schlossgehäuse dient aufgrund seiner Elastizität im Kontaktbereich zum Gegenelement zugleich einer Spielfreistellung für das Gegenelement. Auf diese Weise können Schrägstellungen, Gegenelementtoleranzen und Positionstoleranzen des Gegenelementes sowie der Verriegelungsvorrichtung ausgeglichen oder abgefangen werden.

Eine Trennung des Schlossgehäuses vom Entriegelungsgehäuse reduziert die Anforderungen an die Materialien, insbesondere hinsichtlich der Festigkeitsanforderungen im Bereich der Entriegelungs. Somit kann das Material des Schlossgehäuses so gewählt werden, dass dieses bessere Eigenschaften für die Umsetzung einer Anschlag- und Dämpfungsfunktion aufweist. Zudem wird die Geometrie vereinfacht, was das Werkzeugkonzept vereinfacht. Die Möglichkeit der Befestigung eines separaten Entriegelungsgehäuses erlaubt zudem, verschiedene, kundenspezifische Varianten der Entriegelung einzusetzen bei ansonsten identischen Verriegelungsvorrichtung.

Die erfindungsgemäße Verriegelungsvorrichtung kann an verschiedenen Stellen eines Fahrzeugsitzes verwendet werden, beispielsweise zur Bodenanbindung des gesamten Fahrzeugsitzes oder als Lehnenschloss zur Befestigung der Lehne an der Fahrzeugstruktur.

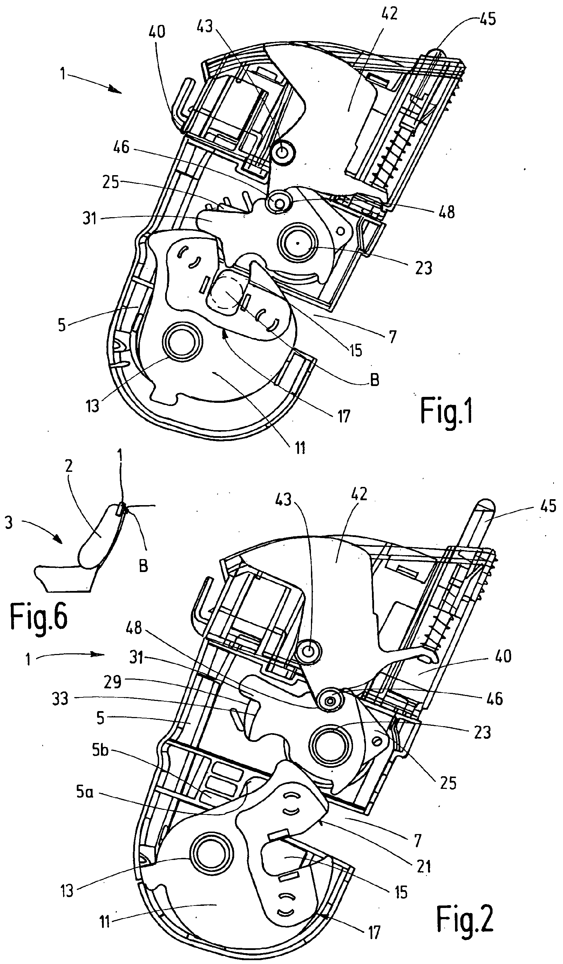

Im folgenden ist die Erfindung anhand eines in der Zeichnung dargestellten Ausführungsbeispiels näher erläutert. Es zeigen
- Fig. 1: einen Schnitt durch das Ausführungsbeispiel im verriegelten Zustand mit angedeutetem Gegenelement,
- Fig. 2: einen Schnitt durch das Ausführungsbeispiel im entriegelten Zustand,

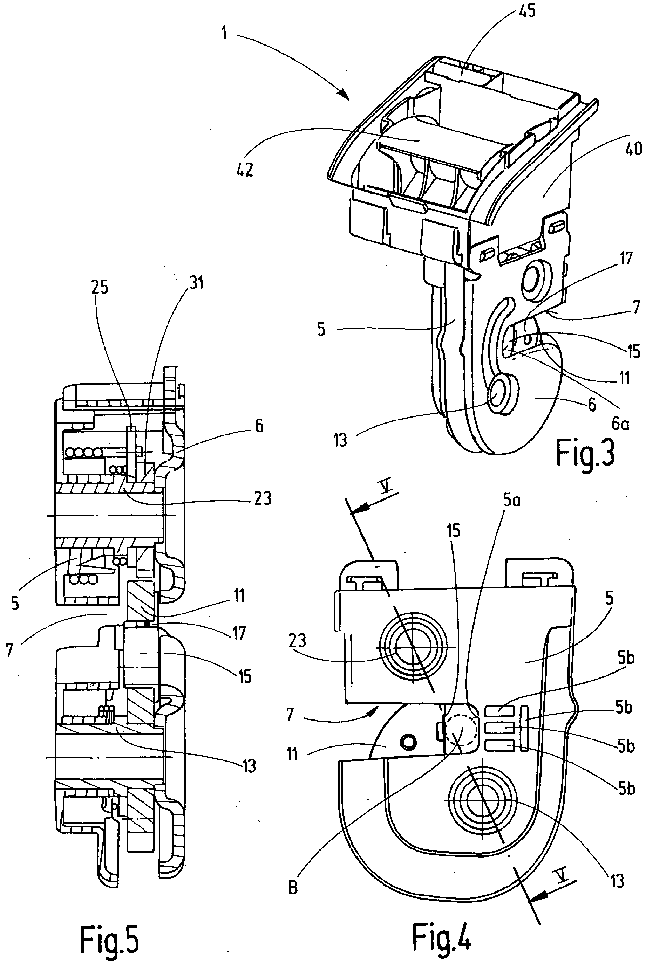

- Fig. 3: eine perspektivische Ansicht des Ausfiihrungsbeispiels,
- Fig. 4: eine Teilansicht des Ausführungsbeispiels im Bereich des Schlossgehäuses,
- Fig. 5: einen Schnitt entlang der Linie V-V in Fig. 4,
- Fig. 6: eine schematisierte Darstellung eines Fahrzeugsitzes,

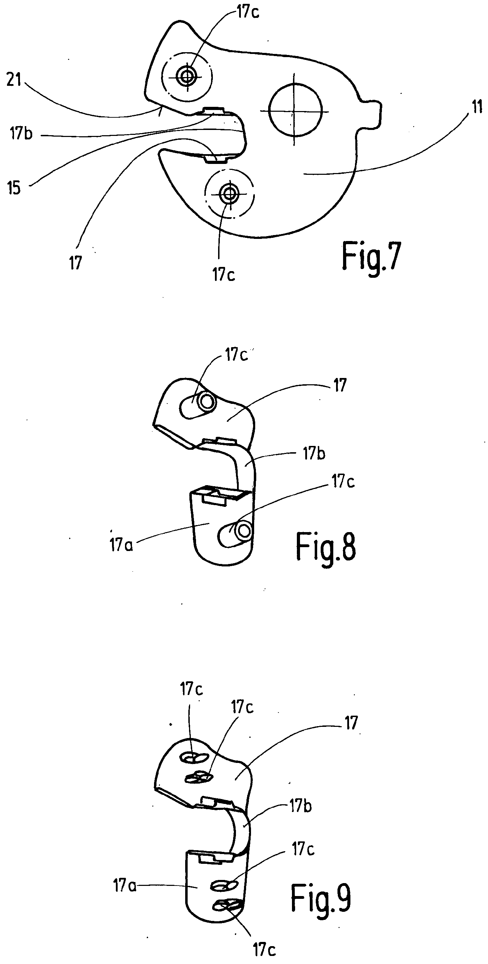

- Fig. 7: eine Ansicht der Klinke mit Kappe,
- Fig. 8: eine Ausführung der Kappe, und
- Fig. 9: eine alternative Ausführung der Kappe.

In einem Kraftfahrzeug ist eine Verriegelungsvorrichtung 1 zur Anbindung einer Lehne 2 eines Fahrzeugsitzes 3 an der Fahrzeugstruktur vorgesehen. Die Verriegelungsvorrichtung 1 weist ein halboffenes Schlossgehäuse 5 mit einer näherungsweise ebenen Grundfläche und hochgezogenen Rändern auf. Die Grundfläche ist in der Regel in einer durch die Fahrtrichtung des Kraftfahrzeuges und durch die Vertikale definierten Ebene angeordnet, was die nachfolgend verwendeten Richtungsangaben definiert. Das Schlossgehäuse 5 wird durch einen am Schlossgehäuse 5 anliegenden, zur Grundfläche näherungsweise parallelen Schlossdeckel 6 weitgehend geschlossen. Das Schlossgehäuse 5 ist vorzugsweise aus Kunststoff, optional mit einem Einlegeteil zur Erhöhung der Festigkeit, ausgebildet, während der Schlossdeckel 6 vorzugsweise ein Blechteil (Stahl oder Aluminium) ist.

Das Schlossgehäuse 5 und der Schlossdeckel 6 bilden eine Aufnahme 7 aus, welche sich in Richtung eines Gegenelementes B öffnet, um dieses zum Verriegeln aufzunehmen. Dabei ist von der Verriegelungsvorrichtung 1 und dem Gegenelement B eines an der Struktur der Lehne 2 und das andere an der Fahrzeugstruktur befestigt. Das Gegenelement B kann beispielsweise ein Bolzen oder ein Bügel sein. Der von der Aufnahme 7 aufzunehmende Abschnitt des Gegenelements B verläuft in der Regel horizontal. Die Richtung, in welcher das Gegenelement B von der Aufnahme 7 aufgenommen wird, sei als Einschwenkrichtung bezeichnet. Die Abmessung der Aufnahme 7 senkrecht zur Einschwenkrichtung (und in der Ebene der Grundfläche des Schlossgehäuses 5) ist für einen Spielausgleich vorzugsweise größer als der entsprechende Durchmesser des Gegenelementes B.

Die Aufnahme 7 ist an ihrem Grund so beschaffen, dass in der Einschwenkrichtung der dem Schlossdeckel 6 zugeordnete Bereich gegenüber dem dem Schlossgehäuse 5 zugeordneten Bereich zurückgesetzt ist. Der dem Schlossgehäuse 5 zugeordnete Bereich ist als ein integrierter erster Anschlag 5a ausgebildet, an welchen das Gegenelement B beim Verriegeln in Anlage gelangt. Der erste Anschlag 5a ist elastisch ausgebildet und wirkt dämpfend. Vorliegend ist der erste Anschlag 5a einstückig mit dem - vorzugsweise aus Kunststoff (mit optionalem Einlegeteil) bestehenden - Schlossgehäuse 5 ausgebildet (d.h. der Anschlag 5a wird bei der Herstellung des Schlossgehäuses 5 in einem Stück mit den an den ersten Anschlag 5a anschließenden Bereichen des Schlossgehäuses 5 ausgebildet, vorzugsweise durch durch Spritzgussverfahren). Der in Einschwenkrichtung hinter dem ersten Anschlag 5a gelegene Bereich des Schlossgehäuses 5 weist wenigstens eine, vorzugsweise mehrere Materialaussparungen 5b auf, welche die elastischen und dämpfenden Eigenschaften des ersten Anschlags 5a mitbestimmen. Das Schlossgehäuse 5 wird dadurch im Bereich des ersten Anschlags 5a nachgiebig. An den dem Schlossdeckel 6 zugeordneten Bereich des Grundes der Aufnahme 7 ist ein zweiter Anschlag 6a ausgebildet. Je nach Ausführung kommt das Gegenelement B bei jedem Verriegeln nach Verformen des ersten Anschlags 5a oder erst im Crashfall oder Missbrauchsfall in Anlage an den zweiten Anschlag 6a.

Eine Klinke 11 ist auf einem ersten Lagerbolzen 13 schwenkbar gelagert, welcher wiederum am Schlossgehäuse 5 (und am Schlossdeckel 6) befestigt ist und von dessen Grundfläche senkrecht absteht, d.h. horizontal verläuft. Vorliegend ist der vorzugsweise metallische erste Lagerbolzen 13 mit dem Schlossgehäuse 5 vernietet und mit dem Schlossdeckel 6 verstemmt. Der erste Lagerbolzen 13 ist vorzugsweise hohl ausgebildet, um ein Befestigungsmittel, beispielsweise eine Schraube, aufzunehmen, mittels dessen die Verriegelungsvorrichtung 1 bei der Montage an der zugeordneten Struktur befestigt wird. Die Klinke 11 weist zum Zusammenwirken mit dem Gegenelement B ein Hakenmaul 15 auf.

Auf der vorzugsweise metallischen (oder aus einem anderem harten Material bestehenden) Klinke 11 sitzt eine Kappe 17, vorzugsweise ein Spritzgussteil aus Kunststoff (oder ein Teil aus einem anderen weichen Material). Die einstückig ausgebildete Kappe 17 weist einen ebenen, flächigen Bereich 17a, welcher teilweise die vom Schlossgehäuse 5 abgewandte Seite der Klinke 11 (also einseitig) bedeckt, einen davon (vorzugsweise senkrecht) abstehenden Randbereich 17b, welcher den Rand des Hakenmauls 15 (wenigstens teilweise) bedeckt, und wenigstens einen Vorsprung 17c zur Befestigung an der Klinke 11 auf. Vorliegend weist die Kappe 17 zwei Vorsprünge 17c (oder zwei Paare von Vorsprüngen 17c) auf, welche parallel zum ersten Lagerbolzen 13 vom flächigen Bereich der Kappe 17 abstehen. Jeder Vorsprung 17c (oder jedes Paar von Vorsprüngen 17c) ist durch eine passende Öffnung der Klinke 11 gesteckt und mit der Klinke 11 (vorzugsweise formschlüssig) verbunden, beispielsweise verclipst oder vorzugsweise mittels einer Sonotrode ultraschallgenietet. Die Kappe 17 wirkt geräuschdämpfend, wenn das Gegenelement B vom Hakenmaul 15 aufgenommen wird und in Anlage an den (durch die Kappe 17 bedeckten, d.h. durch deren Randbereich 17b bedeckten) Rand des Hakenmauls 15 kommt.

In der geschlossenen Stellung der Klinke 11 kreuzt das Hakenmaul 15 die Aufnahme 7 etwa senkrecht und öffnet sich zur Seite hin. Die dann in der Einschwenkrichtung ausgerichtete Abmessung des Hakenmauls 15 (samt Kappe 17) ist geringfügig größer als der Durchmesser des Gegenelements B, wodurch der in Einschwenkrichtung weiter innen gelegene Rand des Hakenmauls 15 gegenüber dem Anschlag 5a zurückgesetzt ist, so dass das Gegenelement B im verriegelten Zustand der Verriegelungsvorrichtung 1 nur am Anschlag 5a und nicht an diesem in Einschwenkrichtung weiter innen gelegene Rand des Hakenmauls 15 anliegt. In der geöffneten Stellung der Klinke 11 öffnet sich das Hakenmaul 15 schräg zur Einschwenkrichtung und kreuzt die Aufnahme 7 schräg. Die Klinke 11 ist vorzugsweise in Richtung der geöffneten Stellung vorgespannt.

Die Klinke 11 weist eine Funktionsfläche 21 auf, welche in der verriegelten Stellung näherungsweise in Richtung eines zweiten Lagerbolzens 23 weist, der parallel zum ersten Lagerbolzen 13 angeordnet und auf gleiche Weise am Schlossgehäuse 5 (und am Schlossdeckel 6) befestigt ist. Soweit ein Einlegeteil im Schlossgehäuse 5 vorgesehen ist, hält dieses vorzugsweise die beiden Lagerbolzen 13 und 23 in definiertem Abstand zueinander. Die Funktionsfläche 21 ist beispielsweise kreisbogenförmig gekrümmt und konkav ausgebildet, kann aber auch eben sein. Auf dem zweiten Lagerbolzen 23 ist schwenkbar ein Spannelement 25 gelagert, welches zur Klinke 11 hin vorgespannt ist. Im verriegelten Zustand übt das Spannelement 25 als Sicherungselement mittels einer exzentrisch zum zweiten Lagerbolzen 23 gekrümmte Spannfläche 29, welche sich in nicht-selbsthemmendem Kontakt mit der Funktionsfläche 21 befindet, ein schließendes Moment auf die Klinke 11 aus. Die Spannfläche 29 ist beispielsweise kreisbogenförmig gekrümmt und konvex ausgebildet.

Ein Fangelement 31 ist axial (bezüglich des zweiten Lagerbolzens 23) neben dem Spannelement 25 auf der vom Schlossgehäuse 5 abgewandten Seite angeordnet und ebenfalls schwenkbar auf dem zweiten Lagerbolzen 23 gelagert, also mit dem Spannelement 25 fluchtend. Das Fangelement 31 weist eine Fangfläche 33 auf, welche sich in Nachbarschaft zur Spannfläche 29 befindet, jedoch im verriegelten Zustand beabstandet zur Funktionsfläche 21 ist. Die Fangfläche 33 ist beispielsweise kreisbogenförmig gekrümmt und konvex ausgebildet, kann aber auch eben sein. Das Fangelement 31 kann in seinem Schwerpunkt gelagert sein. Das Fangelement 31 und das Spannelement 25 sind mit einem Leerweg auf Mitnahme gekoppelt, beispielsweise mittels einer Schlitz-Zapfen-Führung oder einem axial abstehenden Mitnehmer. Im Crashfall, wenn die Klinke 11 eventuell ein öffnendes Moment erfährt und das Spannelement 25 etwas wegdrückt, gelangt die Fangfläche 33 in Anlage an die Funktionsfläche 21, ohne das ein öffnendes Moment übertragen werden kann. So dient das Fangelement 31 der Abstützung der Klinke 11 und verhindert als weiteres Sicherungselement ein Öffnen derselben.

Die Verriegelungsvorrichtung 1 weist ferner ein Entriegelungsgehäuse 40 auf, welches separat ausgebildet und am oberen Ende des Schlossgehäuses 5 und des Schlossdeckels 6 befestigt ist. Vorliegend ist das Entriegelungsgehäuse 40 in horizontaler Richtung ("seitlich") auf das Schlossgehäuse 5 aufgeschoben und mit dem Schlossdeckel 6 verclipst, wobei durch das Aufschieben des Entriegelungsgehäuses 40 die Clipsverbindung zwischen Schlossgehäuse 5 und Schlossdeckel 6 gegen ein Lösen der Verbindung gesichert wird. Das Entriegelungsgehäuse 40 ist im wesentlichen als ein Schacht ausgebildet, innerhalb dessen ein Entriegelungsgriff 42 angeordnet und von oben zugänglich ist. Der Entriegelungsgriff 42 ist manuell um eine zu den Lagerbolzen 13 und 23 parallele Entriegelungsachse 43 schwenkbar im Entriegelungsgehäuse 40 gelagert. An den Entriegelungsgriff 42 elastisch angekoppelt ist ein Indikator 45, welcher im Entriegelungsgehäuse 40 längsverschieblich geführt ist und aus diesem teilweise ausfahren kann, um den entriegelten Zustand der Verriegelungsvorrichtung 1 anzuzeigen. Die elastische Ankopplung des Indikators 45 hat den Sinn, Beschädigungen des ausgefahrenen Indikators 45 im Missbrauchsfall zu vermeiden. Die elastische Ankopplung erfolgt beispielsweise mittels einer Feder oder eines anderen, elastischen Elementes, mittels dessen der Entriegelungsgriff 42 den Indikator 45 ansteuert und ausfährt. Je nach Art und Geometrie des elastischen Elementes kann zum Einfahren des Indikators 45, d.h. wenn der verriegelte Zustand der Verriegelungsvorrichtung 1 anzuzeigen ist, eine zeitweilige, formschlüssige Anlage von Indikator 45 und Entriegelungsgriff 42 vorgesehen sein. Der Indikator 45 ist wenigstens bereichsweise in einer Signalfarbe eingefärbt, welche sich vorzugsweise deutlich von der Farbe des Entriegelungsgehäuses 40 oder dessen Blenden unterscheidet.

Der Entriegelungsgriff 42 weist an seinem unteren Ende ein Betätigungselement 46 auf. Das Betätigungselement 46 ist vorliegend als ein angeformter Stift ausgebildet, welcher parallel zur Entriegelungsachse 43 vom Entriegelungsgriff 42 absteht. Das Betätigungselement 46 greift gelenkig am Fangelement 31 an, so dass eine direkte Anlenkstelle 48 zwischen Entriegelungsgriff 42 und Fangelement 31 gebildet wird. Die Anlenkstelle 48 ist zur Entriegelungsachse 43 (parallel) versetzt angeordnet. Vorliegend entsteht die Anlenkstelle 48, indem das runde Betätigungselement 46 in einer ausgerundeten, maulartige Aufnahme des Fangelementes 31 zu liegen kommt. Durch die definierte Relativlage von zweitem Lagerbolzen 23 und Entriegelungsachse 43 bleibt die Anlenkstelle 48 in allen Stellungen erhalten. Jedoch ist eine optionale Sicherung möglich, indem die Lippen der maulartigen Aufnahme des Fangelementes 31 das Betätigungselement 46 nach dessen elastischer Deformation hintergreifen.

Im verriegelten Zustand der Verriegelungsvorrichtung 1 befindet sich das Gegenelement B in der Aufnahme 7 und im Hakenmaul 15 der geschlossenen Klinke 11, das Spannelement 25 sichert die Klinke 11, das Fangelement 31 ist geringfügig von der Funktionsfläche 21 beabstandet, der Entriegelungsgriff 42 ist in seiner Ausgangsstellung und der Indikator 45 ist eingefahren. Wird der Entriegelungsgriff 42 geschwenkt, fährt der Indiaktor 45 aus, und mittels der Anlenkstelle 48 wird auch das Fangelement 31 geschwenkt, d.h. die Fangfläche 33 entfernt sich von der Funktionsfläche 21. Das Fangelement 31 nimmt das Spannelement 25 mit, so dass die Klinke 11 nicht länger gesichert ist. Mitgenommen von einem der beiden Sicherungselemente oder durch eine eigene Vorspannung öffnet die Klinke 11. Aufgrund der Schwenkbewegung der Klinke 11 zieht sich das Hakenmaul 15 von der Aufnahme 7 zurück und gibt das Gegenelement B frei, welches sich entgegen der Einschwenkrichtung relativ zur Verriegelungsvorrichtung 1 entfernt. Vorzugsweise liegen im entriegelten Zustand der Verriegelungsvorrichtung 1 die Klinke 11 und das Fangelement 31 zur gegenseitigen Stützung an einer jeweils von der Funktionsfläche 21 und der Fangfläche 33 verschiedenen Stelle aneinander an, so dass das Hakenmaul 15 aufnahmebereit bleibt.

Gelangt in diesem entriegelten Zustand das Gegenelement B wieder in die Aufnahme 7 und in Anlage an den (mit der Kappe 17 bedeckten) Rand des Hakenmauls 15, so drückt das Gegenelement B die Klinke 11 in ihre geschlossene Stellung. Das Spannelement 25 bewegt sich (aufgrund seiner Vorspannung) entlang der Funktionsfläche 21, ebenso wie das vom Spannelement 25 mitgenommen oder aufgrund eigener Vorspannung schwenkende Fangelement 31, wodurch diese beiden Sicherungselemente wieder die Klinke 11 sichern. Das schwenkende Fangelement 31 schwenkt den Entriegelungsgriff 42 wieder in seiner Ausgangsstellung, welcher dabei den Indikator 45 einfährt.

### Bezugszeichenliste

- 1: Verriegelungsvorrichtung
- 2: Lehne
- 3: Fahrzeugsitz
- 5: Schlossgehäuse
- 5a: erster Anschlag
- 5b: Materialaussparung
- 6: Schlossdeckel
- 6a: zweiter Anschlag
- 7: Aufnahme
- 11: Klinke
- 13: erster Lagerbolzen
- 15: Hakenmaul
- 17: Kappe
- 17a: flächiger Bereich
- 17b: Randbereich
- 17c: Vorsprung
- 21: Funktionsfläche
- 23: zweiter Lagerbolzen
- 25: Spannelement
- 29: Spannfläche
- 31: Fangelement
- 33: Fangfläche
- 40: Entriegelungsgehäuse
- 42: Entriegelungsgriff
- 43: Entriegelungsachse
- 45: Indiaktor
- 46: Betätigungselement
- 48: Anlenkstelle
- B: Gegenelement

## Patentansprüche

1. Verriegelungsvorrichtung für einen Fahrzeugsitz, insbesondere für einen Kraftfahrzeugsitz, mit einem Schlossgehäuse (5), mit einer Klinke (11) zum Verriegeln mit einem Gegenelement (B), welche um einen ersten Lagerbolzen (13) schwenkbar gelagert ist, wenigstens einem Sicherungselement (25, 31), welches um einen parallel zum ersten Lagerbolzen (13) angeordneten, zweiten Lagerbolzen (23) schwenkbar gelagert ist und welches die Klinke (11) im verriegelten Zustand in dem Schlossgehäuse (5) sichert, und einem beweglichen Entriegelungsgriff (42), welcher manuell um eine zu den Lagerbolzen (13, 23) parallele Entriegelungsachse (43) schwenkbar in einem separaten Entriegelungsgehäuse (40) gelagert ist, welches im Wesentlichen als ein Schacht ausgebildet ist, innerhalb dessen der Entriegelungsgriff (42) angeordnet und von oben zugänglich ist, **dadurch gekennzeichnet, dass** der Entriegelungsgriff (42) mittels einer einzigen Anlenkstelle (48) direkt an einem der vorhandenen Sicherungselemente (25, 31) angelenkt ist.

2. Verriegelungsvorrichtung nach Anspruch 1, **dadurch gekennzeichnet, dass** zur Bildung der Anlenkstelle (48) der Entriegelungsgriff (42) ein stiftartiges Betätigungselement (46) und das Sicherungselement (25, 31) eine maulartige Aufnahme aufweisen.

3. Verriegelungsvorrichtung nach einem der vorhergehenden Ansprüche, **dadurch gekennzeichnet, dass** ein Spannelement (25) und ein Fangelement (31) als Sicherungselemente (25, 31) vorgesehen sind, wobei im verriegelten Zustand das vorgespannte Spannelement (25) im Normalfall ein schließendes Moment auf die Klinke (11) ausübt und das Fangelement (31) im Crashfall die Klinke (11) abstützt.

4. Verriegelungsvorrichtung nach Anspruch 3, **dadurch gekennzeichnet, dass** das Spannelement (25) und das Fangelement (31) um den gleichen zweiten Lagerbolzen (23) schwenkbar gelagert sind.

5. Verriegelungsvorrichtung nach Anspruch 3 oder 4, **dadurch gekennzeichnet, dass** die Klinke (11) zum Zusammenwirken mit dem Spannelement (25) und dem Fangelement (31) eine gemeinsame Funktionsfläche (21) aufweist.

6. Verriegelungsvorrichtung nach einem der Ansprüche 3 bis 5, **dadurch gekennzeichnet, dass** die Anlenkstelle (48) am Fangelement (31) vorgesehen ist.

7. Verriegelungsvorrichtung nach einem der vorhergehenden Ansprüche, da-durch gekennzeichnet, dass am Entriegelungsgriff (42) ein Indikator (45) elastisch angekoppelt ist.

8. Verriegelungsvorrichtung nach einem der vorhergehenden Ansprüche, **dadurch gekennzeichnet, dass** an der Klinke (11) eine Kappe (17) sitzt, welche wenigstens teilweise den Rand eines Hakenmauls (15) der Klinke (11) bedeckt.

9. Verriegelungsvorrichtung nach Anspruch 8, **dadurch gekennzeichnet, dass** die Klinke (11) aus einem harten Material, insbesondere aus Metall, und die Kappe (17) aus einem weicheren Material, insbesondere Kunststoff, ausgebildet ist.

10. Verriegelungsvorrichtung nach einem der vorhergehenden Ansprüche, **gekennzeichnet durch** ein Schlossgehäuse (5), welches die Klinke (11) und das Sicherungselement (25, 31) lagert und einen integrierten ersten Anschlag (5a) für das Gegenelement (B) aufweist, der bei Anlage des Gegenelements (B) dämpfend wirkt.

11. Verriegelungsvorrichtung nach Anspruch 10, **dadurch gekennzeichnet, dass** der erste Anschlag (5a) sich bei Anlage des Gegenelements (B) elastisch verformt.

12. Verriegelungsvorrichtung nach Anspruch 10 oder 11, **dadurch gekennzeichnet, dass** das Schlossgehäuse (5) halboffen ausgebildet ist und durch einen Schlossdeckel (6) wenigstens weitgehend geschlossen wird.

13. Verriegelungsvorrichtung nach Anspruch 12, **dadurch gekennzeichnet, dass** der Schlossdeckel (6) einen zweiten Anschlag (6a) aufweist, an welchen das Gegenelement (B) nach Verformung des ersten Anschlags (5a) in Anlage gelangt.

14. Fahrzeugsitz mit wenigstens einer Verriegelungsvorrichtung (1) nach einem der vorhergehenden Ansprüche.

## Claims

1. Locking mechanism for a vehicle seat, in particular for a motor vehicle seat, comprising a lock housing (5), comprising a latch (11) for locking to a counter element (B), which is pivotably mounted about a first bearing pin (13), at least one securing element (25, 31) which is pivotably mounted about a second bearing pin (23) arranged parallel to the first bearing pin (13) and which secures the latch (11) in the locked state in the lock housing (5), and a movable unlocking handle (42) which is mounted, manually pivotably about an unlocking axis (43) parallel to the bearing pins (13, 23), in a separate unlocking housing (40) which is substantially configured as a vertical duct, within which the unlocking handle (42) is arranged and is accessible from above, **characterized in that** the unlocking handle (42) is directly articulated to one of the securing elements (25, 31) present, by means of a single point of articulation (48).

2. Locking mechanism according to Claim 1, **characterized in that**, to form the point of articulation (48), the unlocking handle (42) has a pin-like actuating element (46) and the securing element (25, 31) has a jaw-like receiver.

3. Locking mechanism according to one of the preceding claims, **characterized in that** a clamping element (25) and a capture element (31) are provided as securing elements (25, 31), in the locked state the pretensioned clamping element (25) in the normal case exerting a closing moment on the latch (11) and in the event of a crash the capture element (31) supporting the latch (11).

4. Locking mechanism according to Claim 3, **characterized in that** the clamping element (25) and the capture element (31) are pivotably mounted about the same second bearing pin (23).

5. Locking mechanism according to Claim 3 or 4, **characterized in that** the latch (11) has a common functional surface (21) for cooperating with the clamping element (25) and the capture element (31).

6. Locking mechanism according to one of Claims 3 to 5, **characterized in that** the point of articulation (48) is provided on the capture element (31).

7. Locking mechanism according to one of the preceding claims, **characterized in that** an indicator (45) is resiliently coupled to the unlocking handle (42).

8. Locking mechanism according to one of the preceding claims, **characterized in that** a cap (17) is located on the latch (11), said cap at least partially covering the edge of a hook opening (15) of the latch (11).

9. Locking mechanism according to Claim 8, **characterized in that** the latch (11) is formed from a hard material, in particular metal, and the cap (17) from a softer material, in particular plastics.

10. Locking mechanism according to one of the preceding claims, **characterized by** a lock housing (5) which bears the latch (11) and the securing element (25, 31) and has an integrated first stop (5a) for the counter element (B) which acts in a damping manner when bearing against the counter element (B).

11. Locking mechanism according to Claim 10, **characterized in that** the first stop (5a) is resiliently deformed when bearing against the counter element (B).

12. Locking mechanism according to Claim 10 or 11, **characterized in that** the lock housing (5) is configured to be half-open and is at least substantially closed by a lock cover (6).

13. Locking mechanism according to Claim 12, **characterized in that** the lock cover (6) has a second stop (6a) against which the counter element (B) comes to bear after deformation of the first stop (5a).

14. Vehicle seat comprising at least one locking mechanism (1) according to one of the preceding claims.

## Revendications

1. Dispositif de verrouillage pour un siège de véhicule, en particulier pour un siège de véhicule automobile, comprenant un boîtier de serrure (5), comprenant un cliquet (11) pour le verrouillage à un élément conjugué (B), qui est supporté de manière pivotante autour d'un premier axe de palier (13), au moins un élément de fixation (25, 31) qui est monté de manière à pouvoir pivoter autour d'un deuxième axe de palier (23) disposé parallèlement au premier axe de palier (13) et qui fixe le cliquet (11) dans l'état verrouillé dans le boîtier de serrure (5) et une prise de déverrouillage mobile (42) qui est supportée de manière à pouvoir être pivotée manuellement autour d'un axe de déverrouillage (43) parallèle à l'axe de palier (13, 23) dans un boîtier de déverrouillage séparé (40) qui est réalisé essentiellement sous forme de cage à l'intérieur de laquelle la poignée de déverrouillage (42) est disposée et est accessible depuis le dessus, **caractérisé en ce que** la poignée de déverrouillage (42) est articulée au moyen d'un point d'articulation unique (48) directement à l'un des éléments de fixation présents (25, 31).

2. Dispositif de verrouillage selon la revendication 1, **caractérisé en ce que** pour former le point d'articulation (48), la poignée de déverrouillage (42) présente un élément d'actionnement en forme de goupille (46) et l'élément de fixation (25, 31) présente un logement en forme de mâchoire.

3. Dispositif de verrouillage selon l'une quelconque des revendications précédentes, **caractérisé en ce qu'**un élément de serrage (25) et un élément de capture (31) sont prévus en tant qu'éléments de fixation (25, 31), l'élément de serrage précontraint (25), dans l'état verrouillé, dans un cas normal, exerçant un couple de fermeture sur le cliquet (11) et l'élément de capture (31), en cas de collision, supportant le cliquet (11).

4. Dispositif de verrouillage selon la revendication 3, **caractérisé en ce que** l'élément de serrage (25) et l'élément de capture (31) sont supportés de manière pivotante autour du même deuxième axe de palier (23).

5. Dispositif de verrouillage selon les revendications 3 ou 4, **caractérisé en ce que** le cliquet (11), pour coopérer avec l'élément de serrage (25) et l'élément de capture (31), présente une surface fonctionnelle commune (21).

6. Dispositif de verrouillage selon l'une quelconque des revendications 3 à 5, **caractérisé en ce que** le point d'articulation (48) est prévu au niveau de l'élément de capture (31).

7. Dispositif de verrouillage selon l'une quelconque des revendications précédentes, **caractérisé en ce qu'**un indicateur (45) est accouplé élastiquement à la poignée de déverrouillage (42).

8. Dispositif de verrouillage selon l'une quelconque des revendications précédentes, **caractérisé en ce qu'**un capuchon (17) repose sur le cliquet (11), lequel recouvre au moins en partie le bord d'une mâchoire de crochet (15) du cliquet (11).

9. Dispositif de verrouillage selon la revendication 8, **caractérisé en ce que** le cliquet (11) est réalisé à partir d'un matériau dur, en particulier de métal, et le capuchon (17) est réalisé à partir d'un matériau plus tendre, en particulier de plastique.

10. Dispositif de verrouillage selon l'une quelconque des revendications précédentes, **caractérisé par** un boîtier de serrure (5) qui supporte le cliquet (11) et l'élément de fixation (25, 31) et qui présente une première butée intégrée (5a) pour l'élément conjugué (B), qui agit avec un effet d'amortissement lors de l'appui de l'élément conjugué (B).

11. Dispositif de verrouillage selon la revendication 10, **caractérisé en ce que** la première butée (5a) se déforme élastiquement lors de l'appui de l'élément conjugué (B).

12. Dispositif de verrouillage selon la revendication 10 ou 11, **caractérisé en ce que** le boîtier de serrure (5) est réalisé de manière à moitié ouverte et est au moins sensiblement fermé par un couvercle de serrure (6).

13. Dispositif de verrouillage selon la revendication 12, **caractérisé en ce que** le couvercle de serrure (6) présente une deuxième butée (6a) au niveau de laquelle l'élément conjugué (B) vient en appui après la déformation de la première butée (5a).

14. Siège de véhicule comprenant au moins un dispositif de verrouillage (1) selon l'une quelconque des revendications précédentes.
